# EUROPEAN PATENT APPLICATION

(11) **EP 2 921 677 A2**
(43) Date of publication of application: **23.09.2015**
(21) Application number: 15153361.9
(22) Date of filing: 30.01.2015
(51) Int. Cl.: F02D 41/02, F02D 41/14, F02D 41/00

(54) **EXHAUST GAS PURIFICATION APPARATUS FOR AN INTERNAL COMBUSTION ENGINE**

(30) Priority: 31.01.2014 JP 2014017316
(71) Applicant: Toyota Jidosha Kabushiki Kaisha, Toyota-shi, Aichi-ken 471-8571 (JP)
(72) Inventor: Ushida, Norihiro, Toyota-Shi, Aichi-Ken, 471-8571 (JP); Shirasawa, Takeru, Toyota-Shi, Aichi-Ken, 471-8571 (JP)
(74) Representative: Intès, Didier Gérard André

(57) **Abstract**

The concentration of an additive agent supplied to a catalyst is made more uniform. Provision is made for a variable capacity type turbocharger (50) arranged in an exhaust passage (3), a catalyst (5) arranged at the downstream side of the variable capacity type turbocharger (50), and a supply device for supplying the additive agent into the exhaust passage (3) at a location upstream of the catalyst, wherein a control device is provided that adjusts, when supplying the additive agent from the supply device, the degree of opening of nozzle vanes (57) in such a manner that the speed of a swirling flow of exhaust gas generated when the exhaust gas of the internal combustion engine passes through the variable capacity type turbocharger (50) falls within a predetermined range.

## Description

### [TECHNICAL FIELD]

The present invention relates to an exhaust gas purification apparatus for an internal combustion engine.

### [BACKGROUND ART]

An additive agent such as a reducing agent, an oxidizing agent or the like may be injected into an exhaust gas in an internal combustion engine. It is desirable for this additive agent to disperse uniformly in the radial direction of a downstream catalyst, before arriving at the catalyst, etc.

Here, provision may be made for a variable capacity type turbocharger, an oxidation catalyst and an NOx catalyst, which are arranged in an exhaust passage of an internal combustion engine in this order sequentially from an upstream side (for example, refer to a first patent literature). In such a construction, the temperature of the oxidation catalyst and the temperature of the NOx catalyst can be caused to rise by supplying fuel to the oxidation catalyst. When the exhaust gas of the internal combustion engine passes through the variable capacity type turbocharger, the exhaust gas will swirl around a central axis of the exhaust passage. For this reason, fuel in the exhaust gas disperses in a wide range. However, as the amount of intake air in the internal combustion engine increases, the flow speed of the swirling flow of the exhaust gas at the downstream side of the variable capacity type turbocharger becomes higher. For this reason, the fuel added into the exhaust gas will be locally located or unevenly distributed at a wall surface side of the exhaust passage. When the fuel arrives at the oxidation catalyst as it is, the fuel is deviated or unevenly distributed to an outer peripheral side of the oxidation catalyst. An amount of fuel, which is able to make reactions at the outer peripheral side of the oxidation catalyst, is smaller than an amount of fuel which is able to make reactions in the oxidation catalyst as a whole, and hence, when fuel is locally or unevenly distributed at the outer peripheral side of the oxidation catalyst, the fuel becomes unable to make reactions completely or fully. In that case, it becomes able to add only an amount of fuel which is able to make reactions at the outer peripheral side of the oxidation catalyst (i.e., it becomes unable to add a larger amount of fuel than that), so the rises in temperature of the oxidation catalyst and the NOx catalyst become slow.

In addition, there has been known a technique in which in an exhaust passage of an internal combustion engine, there is arranged a fuel addition valve at the upstream side of a turbine of a turbocharger, wherein at the time of idling or light load operation of the internal combustion engine, the number of revolutions per unit time of the turbine is caused to rise or increase before the addition of fuel is carried out (for example, refer to a second patent literature). Even in cases where the flow rate of the exhaust gas is small, such as at the time of idling or light load operation of the internal combustion engine, the diffusion of fuel will be promoted when fuel passes through the turbine of which the number of revolutions per unit time has been raised or increased. However, as described above, when the flow speed of the swirling flow of the exhaust gas becomes high at the downstream side of the turbocharger, fuel will be locally or unevenly distributed to the wall surface side of the exhaust passage. In the second patent literature, the local or uneven distribution of fuel by the swirling flow of the exhaust gas is not taken into consideration.

In addition, in cases where a catalyst is arranged at the downstream side of the turbine, there is a fear that clogging may be caused in an upstream side end portion of a filter due to a cause of the swirling flow generated by the turbine. To cope with this, there has been known a technology in which in order to offset the swirling flow generated in the turbine, a reverse swirling flow is caused to generate in the exhaust gas flowing out of a waste gate (for example, refer to a third patent literature). However, when the swirling flow of the exhaust gas is lost or the flow speed of the swirling flow of the exhaust gas becomes too low, it becomes difficult for an additive agent to reach up to the wall surface side of the exhaust passage, thus giving rise to a fear that the concentration of the additive agent may become high at the central axis side of the exhaust passage.

Here, note that, similarly, in cases where urea or ammonia is supplied to an NOx catalyst, the urea or ammonia is locally or unevenly distributed to an outer peripheral side of the NOx catalyst due to the swirling flow, and hence, there is a fear that the rate of NOx reduction may decrease or become low.

### [PRIOR ART REFERENCES]

### [PATENT LITERATURES]

[First Patent Literature] Japanese Patent Laid-Open Publication No. 2009-150271
[Second Patent Literature] Japanese patent laid-open publication No. 2008-163884
[Third Patent Literature] Japanese patent laid-open publication No. 2009-275527
[Fourth Patent Literature] Japanese patent laid-open publication No. 2012-047119

### [SUMMARY OF THE INVENTION]

### [PROBLEMS TO BE SOLVED BY THE INVENTION]

The present invention has been made in view of the problems as mentioned above, and the object of the invention is to make more uniform the concentration of an additive agent to be supplied to a catalyst.

### [MEANS FOR SOLVING THE PROBLEMS]

In order to achieve the above-mentioned object, the present invention resides in an exhaust gas purification apparatus for an internal combustion engine which includes:
a variable capacity type turbocharger that is arranged in an exhaust passage of the internal combustion engine, for changing the flow speed of an exhaust gas by changing the degree of opening of a nozzle vane;
a catalyst that is arranged at the downstream side of said variable capacity type turbocharger; and
a supply device that supplies an additive agent into the exhaust passage at a location upstream of said catalyst;
wherein in cases where the additive agent is supplied from said supply device, the degree of opening of said nozzle vane is adjusted in such a manner that the speed of a swirling flow of the exhaust gas generated when the exhaust gas of said internal combustion engine passes through said variable capacity type turbocharger falls within a predetermined range.

The additive agent can also be a reducing agent or an oxidizing agent, for example. For the additive agent, there can be used, for example, fuel, urea water, or ammonia. What is used for the additive agent is decided according to the kind of the catalyst. The additive agent is supplied, for example, at the time of making reactions in the catalyst thereby to generate heat, or at the time of removing or reducing harmful substances in the exhaust gas.

When the exhaust gas of the internal combustion engine passes through the variable capacity type turbocharger, the exhaust gas swirls around a central axis of the exhaust passage due to the rotation of a turbine. If the additive agent is contained in the exhaust gas swirling in this manner, there is a fear that the additive agent may be locally or unevenly distributed to a wall surface side of the exhaust passage under the action of a centrifugal force. When the exhaust gas arrives at the catalyst as it is, the additive agent is locally or unevenly distributed to an outer peripheral side of the catalyst. Here, when the exhaust gas passes through the variable capacity type turbocharger provided with the nozzle vane, the flow speed of the exhaust gas changes according to the degree of opening of the nozzle vane. For this reason, the speed of the swirling flow generated at the downstream side of the variable capacity type turbocharger changes according to the degree of opening of the nozzle vane. As the speed of the swirling flow changes, the extent of local or uneven distribution of the additive agent also changes. That is, in cases where the flow speed of the swirling exhaust gas is high, the extent of local or uneven distribution of the additive agent becomes large. On the other hand, in cases where the flow speed of the swirling exhaust gas is low, the extent of local or uneven distribution of the additive agent becomes small, but it becomes difficult for the additive agent to disperse in the exhaust gas. Here, note that the additive agent may be added from the upstream side of the variable capacity type turbocharger, or from the downstream side thereof. The speed of the swirling flow of the exhaust gas may be a speed thereof at a predetermined position which is at the downstream side of the variable capacity type turbocharger and at the same time at the upstream side of the catalyst. Moreover, the speed of the exhaust gas passing through the nozzle vane may be used, in place of the speed of the swirling flow of the exhaust gas.

In the variable capacity type turbocharger, the flow speed of the exhaust gas passing through the nozzle vane can be adjusted by adjusting the degree of opening of the nozzle vane. As a result of this, it is possible to adjust the speed of the swirling flow of the exhaust gas at the downstream side of the variable capacity type turbocharger. For this reason, it is also possible to adjust the extent of local or uneven distribution of the additive agent by adjusting the degree of opening of the nozzle vane. For example, when the flow speed of the exhaust gas passing through the nozzle vane is too high, the additive agent is deviated or unevenly distributed to the wall surface side of the exhaust passage, and hence, the deviation or uneven distribution of the additive agent is suppressed by making large the degree of opening of the nozzle vane.

Here, the larger the degree of opening of the nozzle vane, the lower the flow speed of the exhaust gas becomes, but when the flow speed of the exhaust gas becomes too low, the additive agent will be deviated or locally distributed to the central axis side of the exhaust passage. For this reason, it is not necessarily enough just to make the flow speed of the exhaust gas low. Accordingly, it is possible to suppress the deviation or local (uneven) distribution of the additive agent, by adjusting the degree of opening of the nozzle vane in such a manner that the flow speed of the exhaust gas can be adjusted so as to make the extent of local or uneven distribution of the additive agent fall within an allowable range. The predetermined range can be a range of the speed of the swirling flow of the exhaust gas in which the extent of local or uneven distribution of the additive agent falls within the allowable range. That is, the predetermined range can be a degree of opening of the nozzle vane in which a difference or variation in the concentration of the additive agent in the radial direction of the exhaust passage falls within an allowable range. This predetermined range may be decided based on a period of time required for the temperature of the catalyst to rise sufficiently, an amount of the additive agent required for the temperature of the catalyst to rise sufficiently, a period of time required for the regeneration of a filter in the case where the filter is arranged at the downstream side of the catalyst, a purification rate of the exhaust gas in the catalyst, etc. However, the predetermined range can also be set, as will be described below.

In the present invention, in cases where the additive agent is supplied from said supply device, said control device may adjust the degree of opening of said nozzle vane in such a manner that an amount of particulate matter to be discharged from the internal combustion engine becomes equal to or less than a predetermined amount.

When the degree of opening of the nozzle vane is changed, the amount of intake air in the internal combustion engine changes, so that the amount of PM to be discharged from the internal combustion engine increases. For example, when the amount of intake air becomes smaller, the amount of discharge of PM decreases. Even though a filter is arranged in the exhaust passage, when the amount of PM to be discharged from the internal combustion engine becomes large, the frequency in which the regeneration of the filter is carried out becomes high, so fuel economy deteriorates. On the other hand, the degree of opening of the nozzle vane may be adjusted in such a manner that the amount of PM to be discharged from the internal combustion engine becomes equal to or less than the predetermined amount. As a result, the amount of PM discharged or emitted from the internal combustion engine can be reduced. Accordingly, the predetermined amount can be set as an upper limit value of an allowable range for the amount of PM to be discharged from the internal combustion engine. For this reason, a lower limit value of said predetermined range may also be set in such a manner that the amount of PM to be discharged from the internal combustion engine becomes equal to or less than the predetermined amount. The amount of particulate matter to be discharged from the internal combustion engine may also be an amount thereof per unit time, or may also be an amount thereof in a predetermined period of time.

In the present invention, provision may be made for a filter that traps particulate matter in the exhaust passage at the downstream side of said catalyst,
said control device may adjust the degree of opening of said nozzle vane in such a manner that a period of time required for the regeneration of said filter becomes equal to or less than a predetermined period of time.

When filter regeneration processing is carried out which is processing of removing the PM trapped by the filter, the temperature of the filter is caused to rise by supplying the additive agent to the catalyst at the upstream side of the filter. Here, when the degree of opening of the nozzle vane is changed, the amount of intake air in the internal combustion engine changes, so that an amount of oxygen passing through the catalyst changes. For example, when the degree of opening of the nozzle vane is made larger, the amount of intake air in the internal combustion engine decreases, so that the amount of oxygen passing through the catalyst decreases. For this reason, an amount of oxygen arriving at the catalyst becomes smaller, so that even if the additive agent is supplied to the catalyst, the amount of heat generation becomes smaller. As a result of this, the rises in temperature of the catalyst and the filter become slower. That is, the period of time required for the regeneration of the filter becomes longer. In this manner, the period of time required for the regeneration of the filter changes according to the degree of opening of the nozzle vane. Here, note that the period of time required for the regeneration of the filter is a period of time from the start of supply of the additive agent to the catalyst until the amount of PM deposited on the filter becomes equal to or less than the predetermined amount. This predetermined amount is an amount of PM with which it can be supposed that the regeneration of the filter has been completed. Because removing the PM from the filter completely takes a certain period of time, a judgment may be made, though some PM remains, that the regeneration of the filter has been completed. This predetermined amount may be decided in consideration of fuel economy. etc.

By adjusting the degree of opening of the nozzle vane in such a manner that the period of time required for the regeneration of the filter becomes equal to or less than the predetermined period of time, it is possible to suppress the period of time required for the regeneration of the filter from becoming long. The predetermined period of time can be set to an upper limit value of an allowable range for the period of time required for the regeneration of the filter. This allowable range can be decided based on gas mileage (fuel consumption), etc. In addition, the lower limit value of said predetermined range may also be set in such a manner that the period of time required for the regeneration of the filter becomes equal to or less than the predetermined period of time. Moreover, the lower limit value of said predetermined range may also be set in such a manner that the period of time required for the regeneration of the filter becomes equal to or less than the predetermined period of time, and at the same time, the amount of PM to be discharged from the internal combustion engine becomes equal to or less than the predetermined amount.

### [EFFECT OF THE INVENTION]

According to the present invention, the concentration of the additive agent to be supplied to the catalyst can be made more uniform.

### [BRIEF DESCRIPTION OF THE DRAWINGS]

[Fig. 1] is a view showing the schematic construction of intake and exhaust systems of an internal combustion engine according to an embodiment of the present invention.
[Fig. 2] is a cross sectional view showing the construction of a turbocharger.
[Fig. 3] is a view showing the relation among the amount of PM to be discharged from the internal combustion engine, the value of CV, and the period of time until filter regeneration processing has been completed, with respect to the swirling speed of exhaust gas.
[Fig. 4] is a view showing the amount of fuel passing through a pre-stage catalyst and the temperature of an SCRF, with respect to the temperature of the exhaust gas flowing out from a turbine housing.
[Fig. 5] is a flow chart showing a flow for adjusting the degree of VN opening.

### [MODE FOR CARRYING OUT THE INVENTION]

Hereinafter, a mode for carrying out the present invention will be exemplarily described in detail based on an embodiment with reference to the attached drawings. However, the dimensions, materials, shapes, relative arrangements and so on of component parts described in the embodiment are not intended to limit the scope of the present invention to these alone in particular as long as there are no specific statements.

### (Embodiment)

Here, description will be made by taking as an example a case in which an exhaust gas purification apparatus for an internal combustion engine according to the present invention is applied to a diesel engine for driving a vehicle. However, it is to be noted that the internal combustion engine according to the present invention is not limited to a diesel engine, but may be a gasoline engine, etc.

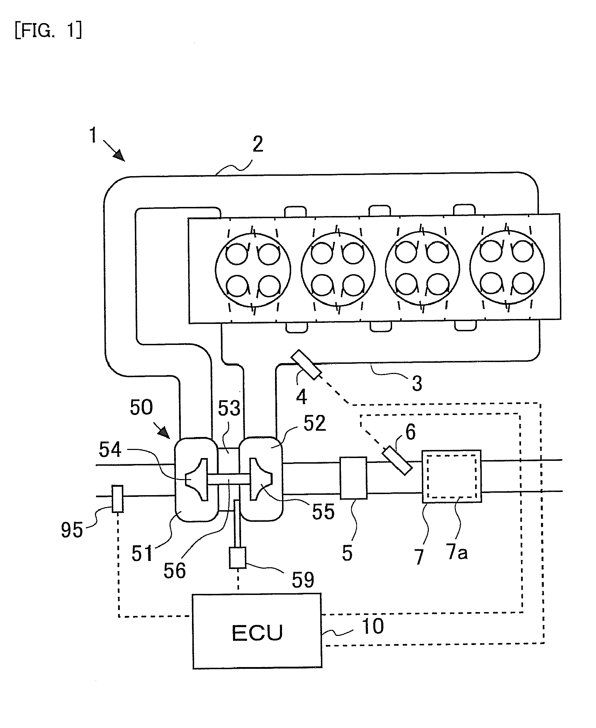

Fig. 1 is a view showing the schematic construction of intake and exhaust systems of an internal combustion engine according to an embodiment. The internal combustion engine 1 is a diesel engine for driving a vehicle. An intake passage 2 and an exhaust passage 3 are connected to the internal combustion engine 1.

The internal combustion engine 1 according to this embodiment is provided with a variable capacity type turbocharger 50 (hereinafter, referred to simply as a "turbocharger 50"). This turbocharger 50 is constructed to be provided with a compressor housing 51, a turbine housing 52, and a center housing 53. The compressor housing 51 is arranged in the middle of the intake passage 2, and the interior of the compressor housing 51 constitutes a part of the intake passage 2. In addition, the turbine housing 52 is arranged in the middle of the exhaust passage 3, and the interior of the turbine housing 52 constitutes a part of the exhaust passage 3. Then, the compressor housing 51 and the turbine housing 52 are connected with each other through the center housing 53.

Inside the compressor housing 51, there is provided a compressor impeller 54 having a plurality of vanes. Also, inside the turbine housing 52, there is provided a turbine impeller 55 having a plurality of vanes. The compressor impeller 54 and the turbine impeller 55 are connected with each other through a rotor shaft 56.

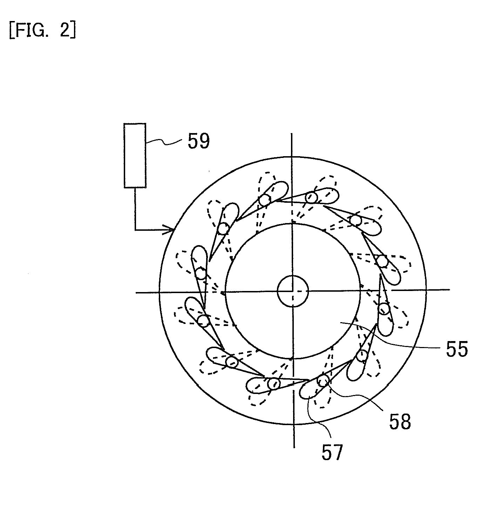

Fig. 2 is a cross sectional view showing the construction of the turbocharger. By changing the degree of opening of nozzle vanes 57, the turbocharger 50 makes the flow speed of the exhaust gas blown on the turbine impeller 55 variable so as to adjust supercharging pressure to a desired pressure. Here, note that the degree of opening of the nozzle vanes 57 is hereinafter referred to as the "degree of VN opening". In Fig. 2, solid lines indicate a case where the nozzle vanes 57 are closed (i.e., a case where the degree of VN opening is small), and broken lines indicate a case where the nozzle vanes 57 are open (i.e., a case where the degree of VN opening is large). Each of the nozzle vanes 57 rotates around the center of a shaft 58 over a range of a prescribed angle.

The turbocharger 50 is constructed such that the turbine impeller 55 is arranged in the turbine housing 52, with the plurality of nozzle vanes 57 being formed on the periphery of the turbine impeller 55, as shown in Fig. 2. These nozzle vanes 57 are driven to open and close by means of an actuator 59. When these nozzle vanes 57 are driven to rotate to a closed side, gaps between adjacent nozzle vanes 57 becomes narrower, so that flow passages between the adjacent nozzle vanes 57 will be closed. On the other hand, when the nozzle vanes 57 are driven to rotate to an open side, the gaps between the adjacent nozzle vanes 57 becomes wider, so that the flow passages between the adjacent nozzle vanes 57 will be opened.

In the turbocharger 50 as constructed in this manner, it becomes possible to change the direction of the flow passages between the adjacent nozzle vanes 57 and the gaps between the adjacent nozzle vanes 57, by adjusting the direction and amount of rotation of the nozzle vanes 57. That is, the direction, the flow speed and the amount of the exhaust gas blown onto the turbine impeller 55 will be adjusted by controlling the direction of rotation and the amount of rotation of the nozzle vanes 57. As a result, the supercharging pressure can be adjusted. Moreover, the flow speed of the exhaust gas flowing out from the turbine housing 52 and the flow speed of the exhaust gas at the downstream side of the turbine housing 52 are changed according to the degree of opening of the nozzle vanes 57.

On the other hand, in the intake passage 2 at the upstream side of the compressor housing 51, there is arranged an air flow meter 95 that outputs a signal corresponding to the flow rate of intake air flowing through the intake passage 2. By means of this air flow meter 95, an amount of intake air sucked into the internal combustion engine 1 is metered or measured.

A fuel addition valve 4 is arranged in the exhaust passage 3 at the upstream side of the turbine housing 52. On the other hand, in the exhaust passage 3 at the downstream side of the turbine housing 52, there are arranged a pre-stage catalyst 5, a reducing agent supply valve 6, and an SCRF 7 sequentially in this order from the upstream side along the flow of the exhaust gas. Here, note that the fuel addition valve 4 should only be arranged at the upstream side of the pre-stage catalyst 5, and hence, it may be arranged in the exhaust passage 3 at the downstream side of the turbine housing 52 and at the upstream side of the pre-stage catalyst 5.

The pre-stage catalyst 5 is an oxidation catalyst. However, the pre-stage catalyst 5 may be a catalyst other than the oxidation catalyst, as long as it has an oxidation function. The pre-stage catalyst 5 may be a three-way catalyst, for example. In order to supply fuel to the pre-stage catalyst 5, the fuel addition valve 4 adds fuel (HC) into the exhaust gas. Here, note that in this embodiment, the fuel addition valve 4 corresponds to a supply device in the present invention. Further, in this embodiment, the pre-stage catalyst 5 corresponds to a catalyst in the present invention.

The SCRF 7 is constructed such that an NOx selective catalytic reduction catalyst 7a (hereinafter, referred to as an SCR catalyst 7a) is supported by a wall flow type filter which serves to trap particulate matter in the exhaust gas. The SCR catalyst 7a adsorbs ammonia, and reduces the NOx in the exhaust gas by using the ammonia as a reducing agent.

In order to supply ammonia as the reducing agent to the SCR catalyst 7a, the reducing agent supply valve 6 supplies ammonia into the exhaust gas. Here, note that a precursor of ammonia may be supplied, in place of ammonia. As the precursor of ammonia, there can be mentioned urea, for example. When urea is hydrolyzed by the heat of the exhaust gas, ammonia is generated. The ammonia or the precursor thereof may be supplied in any state of gas, liquid or solid. Then, the NOx in the exhaust gas is reduced by means of the ammonia, which has been adsorbed by the first SCR catalyst 7a and which acts as a reducing agent.

Here, note that at the downstream side of the SCR catalyst 7a, there can also be arranged a further separate or additional SCR catalyst.

An electronic control unit (ECU) 10 is provided in combination with the internal combustion engine 1. A variety of kinds of sensors such as the air flow meter 95, and so on are electrically connected to the ECU 10. Then, output signals of these various kinds of sensors are inputted to the ECU 10.

Further, the fuel addition valve 4, the reducing agent supply valve 6 and the actuator 59 are electrically connected to the ECU 10. Then, these parts are controlled by means of the ECU 10. Here, note that in this embodiment, the ECU 10 corresponds to a control device in the present invention.

Here, the particulate matter (PM) trapped by the SCRF 7 gradually deposits or accumulates therein. For this reason, the ECU 10 carries out filter regeneration processing in order to remove the PM deposited in the SCRF 7. In the filter regeneration processing, the temperature of the exhaust gas is caused to go up in the pre-stage catalyst 5 by supplying fuel to the pre-stage catalyst 5. The supply of fuel to the pre-stage catalyst 5 is carried out by the addition of fuel from the fuel addition valve 4.

When fuel is oxidized in the pre-stage catalyst 5, heat of oxidation is generated. The exhaust gas flowing into the SCRF 7 is heated by this heat of oxidation. As a result of this, the temperature of SCRF 7 goes up. At the time of carrying out the filter regeneration processing, by controlling the amount of fuel to be supplied to the pre-stage catalyst 5, the temperature of the SCRF 7 is caused to rise to a predetermined filter regeneration temperature (e.g., 600 - 650 degrees C) at which the oxidation of the PM is promoted. As a result, the PM deposited in the SCRF 7 is oxidized and removed.

In this embodiment, each time a predetermined period of time elapses after the execution of the last filter regeneration processing ends, the filter regeneration processing is carried out. Here, note that each time the vehicle with the internal combustion engine 1 mounted thereon travels a predetermined travel distance, the filter regeneration processing may also be carried out. In addition, each time the amount of PM deposition in the SCRF 7 reaches a predetermined amount of deposition, the filter regeneration processing may also be carried out. The amount of PM deposition in the SCRF 7 can be estimated based on the amount of fuel injection in the internal combustion engine 1, the flow rate of the exhaust gas flowing into the SCRF 7, the temperature of the SCRF 7, and so on. The amount of PM deposition may also be estimated based on the difference between the pressures of the exhaust gas at the upstream side and at the downstream side of the SCRF 7.

However, when the exhaust gas passes through the turbine housing 52, the flow speed of the exhaust gas changes according to the degree of VN opening. Further, when the exhaust gas passes through the turbine housing 52, the exhaust gas will swirl around a central axis of the exhaust passage 3. The smaller the degree of VN opening, the higher becomes the speed at which the exhaust gas swirls at the downstream side of the turbine housing 52 (hereinafter, referred to as the swirling speed of the exhaust gas). That is, as the degree of VN opening becomes smaller, the flow speed of the exhaust gas passing through the nozzle vanes 57 becomes higher, as a result of which the swirling speed of the exhaust gas at the downstream side of the turbine housing 52 also becomes higher. Here, note that the swirling speed of the exhaust gas is related to the amount of intake air in the internal combustion engine 1 and the degree of VN opening, and hence, if such a relation between them has been obtained in advance by experiments, simulations, or the like, the swirling speed of the exhaust gas can be obtained based on the amount of intake air in the internal combustion engine 1 and the degree of VN opening. Moreover, the swirling speed of the exhaust gas is in a correlation with the supercharging pressure of the internal combustion engine 1.

Here, even if the ECU 10 carries out the addition of fuel from the fuel addition valve 4 for the purpose of filter regeneration processing, there is a fear that fuel may be deviated or unevenly distributed at the wall surface side of the exhaust passage 3, due to the swirling of the exhaust gas at the downstream side of the turbine housing 52. That is, the fuel flowing into the pre-stage catalyst 5 can be relatively low in concentration in the vicinity of the central axis of the pre-stage catalyst 5, and relatively high in the vicinity of the outer periphery of the pre-stage catalyst 5. In such a case, heat is generated mainly at the outer peripheral side of the pre-stage catalyst 5. The amount of fuel reacting in the outer peripheral side of the pre-stage catalyst 5 is limited, and hence, when fuel is supplied according to the amount of fuel reacting at the outer peripheral side of the pre-stage catalyst 5, the amount of fuel supplied to the central axis side of the pre-stage catalyst 5 will become relatively small. For this reason, it becomes difficult to generate heat in the central axis side of the pre-stage catalyst 5, so it will take a longer period of time until the regeneration processing of the filter will be completed.

That is, in cases where the swirling speed of the exhaust gas is high, the heat generated by the pre-stage catalyst 5 as a whole becomes small, so it will take a longer period of time until the filter regeneration processing will be completed. As a result of this, there is a fear that fuel economy or efficiency may get worse.

Accordingly, in this embodiment, when the filter regeneration processing is being carried out, the swirling speed of the exhaust gas at the downstream side of the turbine housing 52 is adjusted, so that the fuel flowing into the pre-stage catalyst 5 is made uniform in the radial direction of the pre-stage catalyst 5. Here, the flow speed of the exhaust gas at the time of passing through the turbine housing 52 is changed by changing the degree of VN opening. As a result of this, it is possible to change the swirling speed of the exhaust gas. Accordingly, during the execution of the filter regeneration processing, the ECU 90 adjusts the degree of VN opening in such a manner that the fuel flowing into the pre-stage catalyst 5 becomes uniform.

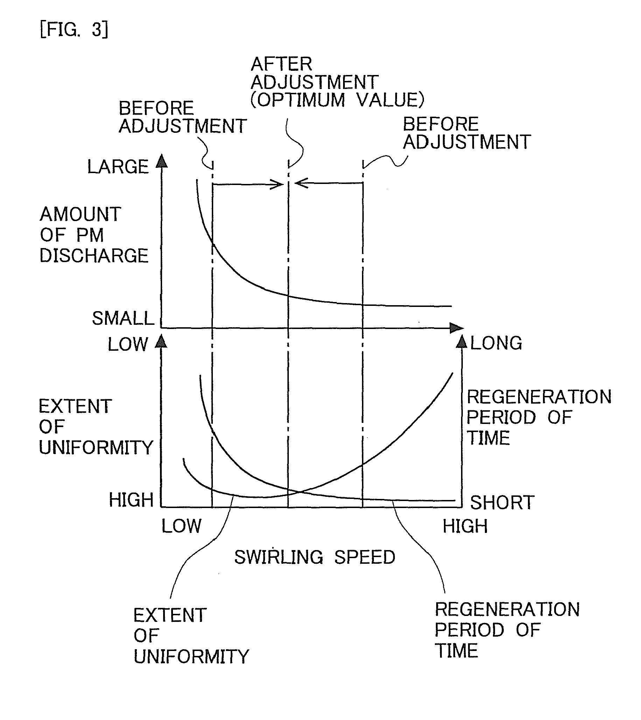

Fig. 3 is a view showing the relation between the amount of PM to be discharged from the internal combustion engine 1 (the amount of PM discharge), the extent of uniformity of the concentration of fuel in an upstream side end face of the pre-stage catalyst 5 (i.e., the degree of uniformity), and the period of time until the filter regeneration processing is completed (i.e., the regeneration period of time), with respect to the swirling speed of the exhaust gas. In Fig. 3, the extent of uniformity of the concentration of fuel in the upstream side end face of the pre-stage catalyst 5 (i.e., the degree of uniformity) may also be the value of CV. "BEFORE ADJUSTMENT" indicates the swirling speed of the exhaust gas before carrying out the adjustment of the degree of VN opening according to this embodiment, and "AFTER ADJUSTMENT" indicates the swirling speed of the exhaust gas after carrying out the adjustment of the degree of VN opening according to this embodiment.

Here, when the swirling speed becomes too high, fuel is deviated or locally distributed to the outer peripheral side of the pre-stage catalyst 5, so the extent of uniformity of fuel becomes low. On the other hand, when the swirling speed becomes too low, fuel is deviated or locally distributed to the central axis side of the pre-stage catalyst 5, so the extent of uniformity of fuel also becomes low. Accordingly, when the swirling speed is too high or too low, the extent of uniformity of fuel becomes low. For this reason, the ECU 10 adjusts the swirling speed of the exhaust gas in such a manner that the extent of uniformity of fuel falls within an allowable range. That is, the ECU 10 adjusts the degree of opening of the nozzle vanes 57 in such a manner that the swirling speed of the exhaust gas falls within a predetermined range.

On the other hand, the smaller the degree of VN opening, the higher becomes the swirling speed of the exhaust gas, whereas the larger the degree of VN opening, the lower becomes the swirling speed of the exhaust gas. As the degree of VN opening becomes smaller, the supercharging pressure will go up easily, so that the amount of intake air to be sucked into the internal combustion engine 1 will be increased. Accordingly, the higher the swirling speed of the exhaust gas, the smaller becomes the amount of PM to be discharged from the internal combustion engine 1. For this reason, in cases where the filter regeneration processing is being carried out, the ECU 10 may adjust the degree of opening of the nozzle vanes 57 in such a manner that the swirling speed of the exhaust gas falls within the predetermined range, and at the same time, the amount of PM to be discharged from the internal combustion engine 1 becomes equal to or less than the predetermined amount.

Further, when the swirling speed is high, the supercharging pressure is high, so a large amount of oxygen is supplied into an engine cylinder. For this reason, a large amount of oxygen comes to be contained in the exhaust gas, too. Accordingly, the higher the swirling speed of the exhaust gas, the shorter becomes the period of time until the filter regeneration processing is completed. For this reason, the ECU 10 may adjust the degree of opening of the nozzle vanes 57 in such a manner that the swirling speed of the exhaust gas falls within the predetermined range, and at the same time, the period of time required until the filter regeneration processing is completed becomes equal to or less than the predetermined period of time. Moreover, the ECU 10 may adjust the degree of opening of the nozzle vanes 57 in such a manner that the swirling speed of the exhaust gas falls within the predetermined range, and at the same time, the amount of PM to be discharged from the internal combustion engine 1 becomes equal to or less than the predetermined amount, and in addition, the period of time required until the filter regeneration processing is completed becomes equal to or less than the predetermined period of time. A lower limit value of the predetermined range of the swirling speed of the exhaust gas may be set so that the amount of PM to be discharged from the internal combustion engine 1 becomes equal to or less than the predetermined amount, or may also be set so that the period of time required until the filter regeneration processing is completed becomes equal to or less than the predetermined period of time.

Based on the above, the degree of VN opening at the time of carrying out the filter regeneration processing is decided. The degree of VN opening is decided such that at least the extent of uniformity of fuel in the upstream side end face of the pre-stage catalyst 5 falls within the allowable range. That is, during the execution of the filter regeneration processing, the ECU 10 adjusts the degree of VN opening in such a manner that the speed of the swirling flow of the exhaust gas generated by passing through the turbocharger 50 falls within the predetermined range. Moreover, the degree of VN opening may be decided in consideration of the amount of PM to be discharged from the internal combustion engine 1 and the period of time until the filter regeneration processing is completed. Here, when only the extent of uniformity of fuel is optimized, the period of time until the filter regeneration processing is completed becomes longer, thus giving rise to a fear that fuel economy may be deteriorated. Further, when only the extent of uniformity of fuel is optimized, the amount of PM to be discharged from the internal combustion engine 1 is increased, whereby there is a fear that the period of time until the regeneration processing of the filter is completed may become longer, or the frequency in which the filter regeneration processing is carried out may become higher. Accordingly, even if the extent of uniformity of fuel becomes somewhat low, the deterioration of fuel economy as a whole may be able to be suppressed by decreasing the amount of PM to be discharged from the internal combustion engine 1, or by shortening the period of time until the filter regeneration processing is completed.

Here, note that the degree of VN opening at the time of not carrying out filter regeneration processing is decided based on the operating state of the internal combustion engine 1 (e.g., the number of engine revolutions per unit time and the engine load). This relation can be obtained in advance through experiments, simulations, or the like. When filter regeneration processing is being carried out, the degree of VN opening is different from that which is decided based on the operating state of the internal combustion engine 1, and hence, the amount of intake air in the internal combustion engine 1 changes. For this reason, when the degree of VN opening is adjusted during the time of carrying out the filter regeneration processing, there is a fear that the output of the internal combustion engine 1 may change. In this case, the change of the output of the internal combustion engine 1 can be suppressed by changing the amount of fuel to be supplied into the cylinder of the internal combustion engine 1 (i.e., the amount of fuel to be combusted or burned in the cylinder of the internal combustion engine 1).

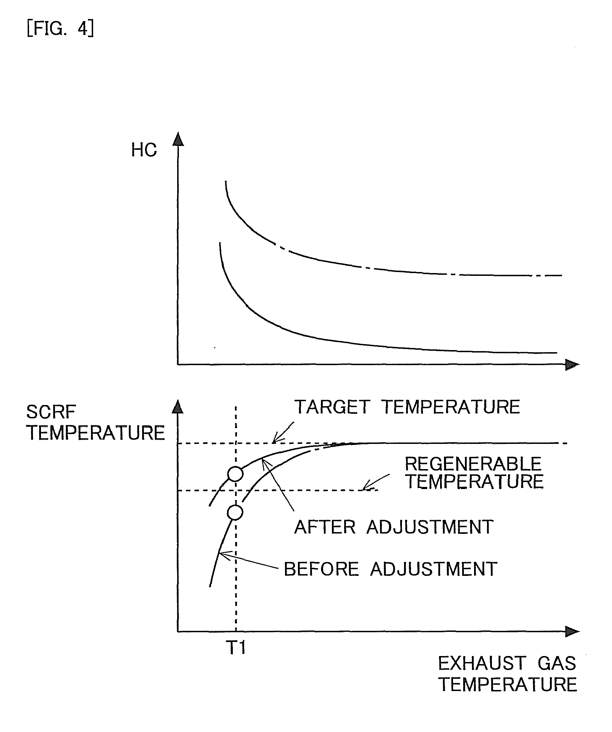

Fig. 4 is a view showing the amount of fuel (HC) passing through the pre-stage catalyst 5 and the temperature of the SCRF 7 (SCRF temperature), with respect to the temperature of the exhaust gas flowing out from the turbine housing 52. A solid line indicates the case (or state) after the adjustment of the degree of VN opening according to this embodiment is carried out, and an alternate long and short dash line indicates the case (or state) before the adjustment of the degree of VN opening according to this embodiment is carried out. A "TARGET TEMPERATURE" is a target temperature during the time of carrying out filter regeneration processing. A "REGENERABLE TEMPERATURE" is a lower limit value of a temperature at which PM can be oxidized.

By optimizing the swirling speed, fuel is uniformly supplied to the pre-stage catalyst 5, so that the amount of fuel passing through the pre-stage catalyst 5 decreases. For this reason, the temperature of the pre-stage catalyst 5 goes up quickly. Accordingly, even if the temperature of the exhaust gas flowing out from the turbine housing 52 is the same, the temperature of the SCRF 7 can be made high by adjusting the swirling speed. That is, even in cases where the temperature of the exhaust gas is low, the temperature of the SCRF 7 is made higher by optimizing the swirling speed. For example, in the case where the temperature of the exhaust gas is T1, as shown in Fig. 4, the regeneration of the filter is possible after the adjustment of the degree of VN opening, but the regeneration of the filter can not be made before the adjustment of the degree of VN opening. Thus, even if the temperature of the exhaust gas is lower, the filter is regenerated.

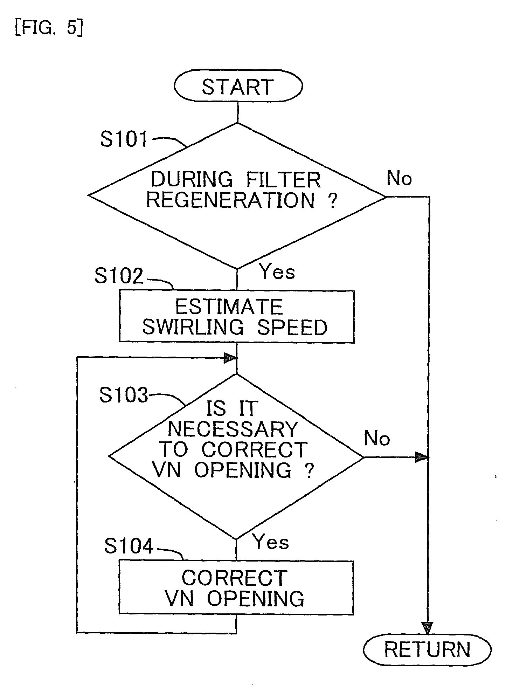

Fig. 5 is a flow chart showing a flow for adjusting the degree of VN opening. This flow chart is carried out by means of the ECU 10 in a repeated manner at each predetermined time interval.

In step S101, it is determined whether filter regeneration processing is being carried out. In this step, it is determined whether it is necessary to supply fuel to the pre-stage catalyst 5 in a uniform manner. In cases where an affirmative determination is made in step S101, the routine advances to step S102, whereas in cases where a negative determination is made, this routine is ended.

In step S102, the swirling speed of the exhaust gas at the downstream side of the turbine housing 52 is estimated. Because the swirling speed of the exhaust gas is related to the amount of intake air in the internal combustion engine 1 and the degree of opening of the nozzle vanes 57, the swirling speed of the exhaust gas is estimated based on the amount of intake air in the internal combustion engine 1 and the degree of opening of the nozzle vanes 57. The relation among the amount of intake air in the internal combustion engine 1, the degree of opening of the nozzle vanes 57 and the swirling speed of the exhaust gas has been obtained in advance by experiments, simulations, or the like. Here, note that because the swirling speed of the exhaust gas is related to the supercharging pressure, the swirling speed of the exhaust gas can also be estimated based on the supercharging pressure. The relation between the supercharging pressure and the swirling speed of the exhaust gas has been obtained in advance through experiments, simulations, or the like.

In step S103, it is determined whether it is necessary to correct the degree of VN opening. In this step, it is determined whether a variation in the concentration of the fuel in the pre-stage catalyst 5 has exceeded an allowable range. That is, it is determined whether it is necessary to correct the degree of VN opening, in order to improve the extent of uniformity of the fuel concentration. The extent of uniformity of fuel in the pre-stage catalyst 5 is estimated based on the swirling speed of the exhaust gas. When the swirling speed of the exhaust gas is within the predetermined range, a determination is made that the correction of the degree of VN opening is not necessary. On the other hand, when the swirling speed of the exhaust gas is out of the predetermined range, a determination is made that the correction of the degree of VN opening is necessary. This predetermined range is decided such that at least the extent of uniformity of fuel in the upstream side end face of the pre-stage catalyst 5 falls within the allowable range. Moreover, the predetermined range may be decided in consideration of the amount of PM to be discharged from the internal combustion engine 1 or the period of time required until the filter regeneration processing is completed. The predetermined range has been obtained in advance through experiments, simulations or the like. In cases where an affirmative determination is made in step S103, the routine advances to step S104, whereas in cases where a negative determination is made, this routine is ended.

In step S104, the degree of VN opening is corrected. In this case, the degree of VN opening is corrected in such a manner that the nozzle vanes 57 are caused to rotate in a direction in which the swirling speed of the exhaust gas falls within the predetermined range. The degree of VN opening may be changed by a predetermined angle, or may be changed by an angle corresponding to a difference between the swirling speed of the exhaust gas to be estimated and the predetermined range. Moreover, the degree of VN opening may be adjusted in such a manner that the swirling speed of the exhaust gas becomes an optimum value, or the degree of VN opening may be adjusted in such a manner that the swirling speed of the exhaust gas comes close to an optimum value. When the processing of step S104 is completed, the routine goes back to step S103. When correcting the degree of VN opening, the amount of fuel to be supplied to the internal combustion engine 1 may be adjusted so as to make engine torque unchanged.

As described above, according to this embodiment, by adjusting the swirling speed of the exhaust gas at the time of supplying fuel to the pre-stage catalyst 5, the fuel can be supplied to the pre-stage catalyst 5 in a uniform manner. That is, it is possible to suppress the fuel from being deviated or unevenly distributed to the outer peripheral side of the pre-stage catalyst 5, due to too high the swirling speed of the exhaust gas. Moreover, it is also possible to suppress the fuel from being deviated or unevenly distributed to the central axis side of the pre-stage catalyst 5, due to too low the swirling speed of the exhaust gas. As a result of this, the temperature of the pre-stage catalyst 5 and the temperature of the SCRF 7 can be caused to go up more quickly with a smaller amount of fuel. Further, the regeneration of the filter can be made from a state in which the temperature of the exhaust gas from the internal combustion engine 1 is lower than usual.

Here, note that in this embodiment, the degree of VN opening is adjusted at the time of supplying fuel to the pre-stage catalyst 5, but instead of this, an NOx catalyst may be arranged at the downstream side of the turbine housing 52, wherein the same (i.e., adjustment of the degree of VN opening) can also be applied to when a reducing agent is supplied to the NOx catalyst.

### [EXPLANATION OF REFERENCE NUMERALS AND CHARACTERS]

- 1: internal combustion engine
- 2: intake passage
- 3: exhaust passage
- 4: fuel addition valve
- 5: pre-stage catalyst
- 6: reducing agent supply valve
- 7: SCRF
- 7a: SCR catalyst
- 50: variable capacity type turbocharger
- 51: compressor housing
- 52: turbine housing
- 53: center housing
- 54: compressor impeller
- 55: turbine impeller
- 56: rotor shaft
- 57: nozzle vanes
- 58: shaft
- 59: actuator
- 95: air flow meter

## Claims

1. An exhaust gas purification apparatus for an internal combustion engine (1) **characterized by** comprising:
a variable capacity type turbocharger (50) that is suitable to be arranged in an exhaust passage (30) of the internal combustion engine (1), for changing the flow speed of an exhaust gas by changing the degree of opening of a nozzle vane (57);
a catalyst (5) that is configured to be arranged at the downstream side of said variable capacity type turbocharger (50) ;
a supply device for supplying an additive agent into the exhaust passage (30) at a location upstream of said catalyst (5); and
a control device for adjusting, when supplying the additive agent from said supply device, the degree of opening of said nozzle vane (57) in such a manner that the speed of a swirling flow of the exhaust gas generated when the exhaust gas of said internal combustion engine (1) passes through said variable capacity type turbocharger (50) falls within a predetermined range.

2. The exhaust gas purification apparatus for an internal combustion engine (1) as set forth in claim 1, **characterized in that** sais control device is configured so that
when the additive agent is supplied from said supply device, said control device adjusts the degree of opening of said nozzle vane (57) in such a manner that an amount of particulate matter to be discharged from the internal combustion engine (1) becomes equal to or less than a predetermined amount.

3. The exhaust gas purification apparatus for an internal combustion engine (1) as set forth in claim 1 or 2, **characterized in that** it further comprises
a filter for trapping particulate matter in the exhaust passage at the downstream side of said catalyst (5); and
said control device is configured to adjust the degree of opening of said nozzle vane (57) in such a manner that a period of time required for regeneration of said filter becomes equal to or less than a predetermined period of time.
